# EUROPEAN PATENT APPLICATION

(11) **EP 2 768 279 A1**
(43) Date of publication of application: **20.08.2014**
(21) Application number: 13382049.8
(22) Date of filing: 19.02.2013
(51) Int. Cl.: H05B 33/08

(54) **Lighting Device**

(71) Applicant: Lighting Intelligence SL, 08018 Barcelona (ES)
(72) Inventor: Tey Pons, Francisco Javier, 08018 Barcelona (ES); Portell Guarch, Jaume, 08018 Barcelona (ES)
(74) Representative: Carpintero Lopez, Francisco

(57) **Abstract**

The present invention relates to a lighting device which comprises a plurality of lighting elements (10) and is characterized in that it comprises: at least one sensor (3) receiving sensory stimuli from an establishment; and control means (2) connected with said at least one sensor (3) and with said lighting elements (10), such that said control means (2) send lighting management instructions to said lighting elements (10) depending on the captured and processed information.

The present invention allows managing lighting in an intelligent manner, for example, by lighting with greater intensity the areas of an establishment where there are more people or the areas where greater attention is needed but are not visited often enough, or in any other suitable manner depending on the information provided by the implemented sensory metrics or other independent business rules.

## Description

The present invention relates to a lighting device which allows managing the lighting of an establishment based on the data coming from mobile devices and/or from sensors.

### Background of the Intention

The use of a lighting system which correctly lights all the areas depending on the use thereof is necessary in establishments such as business premises. Therefore, areas to be emphasized or which are envisaged to have a greater number of visitors are usually lit with greater intensity.

The lighting in said establishments covers the entire working surface, with a greater emphasis on those places where products or services are offered and for the purpose of guiding people through specific routes.

Therefore, the most common purpose of lighting systems is to favor the use of public or private spaces, improving the user's experience of said spaces and emphasizing the usefulness of the services offered therein.

In fact, the customer's experience in those business premises, and specifically at each different point of these business premises, is greatly conditioned by light intensity, its color, its beam and its chromatic reproduction, but it is also influenced by other factors such as sound, temperature and ambient humidity.

However, despite their strategic location, conventional lighting systems act as mere light emitters without measuring in any way whatsoever the experience at the point where they are installed, losing the opportunity of automatically or manually making decisions that transform the customers' experience, improving it or adapting it to the rationale behind said space and to the specific conditions of each moment.

On the other hand, today in business it is common to use data to analyze activities or factors that condition company results. For example, users' preferred choices of products in a business premise can be known today and decisions can be made depending on said data, for example changing the arrangement of the goods to be sold or to be put on sale, etc.

Despite significant data being available for some of the key factors in business results, data representing the customer's sensory experience in the business premise, i.e., the lighting level, number of people occupying the space, arrangement by areas in the shop, sound level at each point, temperature and humidity, etc., is not available today.

Therefore, it is evident that there is a need for a lighting device which allows obtaining sensory evidence in an integral manner, taking advantage of the strategic location thereof, which allows understanding the fundamental factors making up the experience at the point of sale, and which provides mechanisms for managing the lighting of an establishment, such as a business premise, depending on the actual wirelessly obtained data.

The lighting device must therefore incorporate the capacity to collect sensory evidence, specifically to measure light intensity, to measure temperature and humidity, to measure ambient sound, to estimate the number of people present in the establishment by means of capturing radio signals coming from their mobile telephones or other devices and to use cameras for identifying the physical presence of people and their paths.

The lighting device will in turn be complemented by a mechanism capable of collecting other determinant information, such as the weather in the town where the establishment is located, the outdoor temperature and humidity, the sales made at all times and combining this information with the data collected by the lighting device under the exact same time pattern.

Therefore, a first objective of the present invention is to provide a lighting device which allows capturing the mentioned sensory evidence in a synchronized manner, generating valuable data for the owners of the establishment, and at the same time allowing intelligent lighting management according to business rules that are or are not linked with the taken metrics. Furthermore, a second objective of the present invention is to enable easily converting conventional lighting fixtures into the lighting device of the present invention by simply connecting a module in a conventional lighting fixture, with the evident economical benefit that it would entail.

### Description of the Invention

The lighting device of the invention successfully solves the mentioned drawbacks, having other advantages which will be described below.

The lighting device of the present invention comprises a plurality of lighting elements and is **characterized in that** it comprises:
- a sensor receiving sensory stimuli from an establishment, for example, an antenna receiving information from a plurality of electronic devices (mobiles, computers, tablets, etc.) located in said establishment; and
- control means connected with said at least one sensor and with said lighting elements such that said control means send lighting management instructions to said lighting elements depending on the information received from the network based on the captured sensory metrics or other determinant data available (time of day, outdoor temperature and humidity, average metrics, trends, etc.).

Furthermore, the device of the present invention can comprise other sensors, such as temperature and humidity sensors, light intensity sensors, digital cameras, etc.

As a result of this feature, the lighting is successfully managed in an intelligent manner, for example, by lighting with greater intensity the areas of an establishment where there are more people or the areas where greater attention is needed but are not visited often enough, or in any other suitable manner depending on the information provided by the implemented sensory metrics or other independent business rules.

In turn, as a result of this invention highly relevant data is captured in a completely synchronized manner which allows understanding the experience offered in the environment where the lighting elements perform their task.

Advantageously, said control means are connected to said plurality of lighting elements through a lighting controller.

According to a preferred embodiment, said control means comprise means for data input and output, such as a memory card reader and/or a USB port, for example, or any suitable element.

Said control means preferably comprise a microprocessor and said plurality of lighting elements are placed in a lighting module comprising a heat sink for dissipating the heat caused by said lighting elements, a printed circuit board on which the lighting elements are located and optical elements through which the light emitted by said lighting elements passes.

According to a preferred embodiment, said lighting controller comprises a converter that adjusts the intensity or voltage, accordingly the light, depending on the commands from a microcontroller.

Said controller of said lighting elements preferably comprises a microswitch and said lighting elements are light-emitting diodes.

Advantageously, said at least one sensor and the control means are housed in a casing. Therefore, said casing which comprises the sensor or sensors and the control means therein can be connected to a conventional lighting fixture which includes the lighting elements, with the subsequent economic saving that it represents and with the advantage of being able to transform conventional lighting fixtures into the device of the present invention in a very simple manner.

In this case, the device of the present invention will be formed by the sensor or sensors and the control means in said casing and by the lighting elements of a conventional lighting fixture.

If desired, the sensor or sensors can be associated with a USB controller.

### Brief Description of the Drawings

To better understand the foregoing, drawings schematically depicting a practical embodiment only by way of non-limiting example are attached.
Figure 1 is a block diagram of the components of the lighting device of the present invention;
Figure 2 is a block diagram of the components of the control means of the lighting device of the present invention;
Figure 3 is a block diagram of the controller of the lighting elements of the lighting device of the present invention; and
Figure 4 is a block diagram of the lighting module of the lighting device of the present invention.

### Description of a Preferred Embodiment

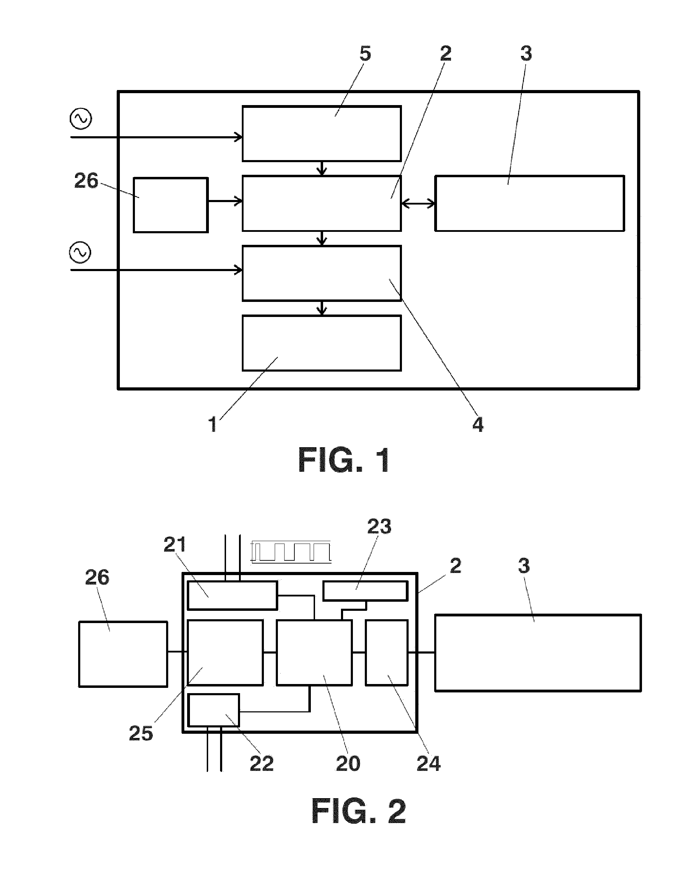

Figure 1 depicts a block diagram of the lighting device of the present invention.

As can be seen in this diagram, the device of the present invention is formed by:
- a lighting module, generally indicated by means of reference number 1, comprising a plurality of lighting elements 10, for example, light-emitting diodes or any suitable lighting element;
- control means, generally indicated by means of reference number 2, comprising a microprocessor 20;
- at least one first sensor 3 which transmits data coming from mobile devices to said control means 2, and which can have its own USB controller;
- a set of additional sensors which could be connected through the USB interface or through any other interface;
- a lighting controller, generally indicated by means of reference number 4, receiving the instructions coming from the control means 2 and sending a corresponding current or voltage signal to said lighting module 1; and
- an energy source 5 providing energy to said control means 2.

It must be indicated that said sensor or sensors 3 can comprise a WiFi antenna, a Bluetooth antenna, a light sensor, a temperature sensor, a humidity sensor, a sound sensor and/or a camera, or any suitable sensor.

Said control means 2 are described below in reference to Figure 2, and they comprise a microprocessor 20 to which there are connected an input/output connection 21, a power source 22, a lighting element indicator 23 and, according to the depicted embodiment, a USB port 24 and a reader 25 for memory cards 26, which allow storing the data in a physical medium. Furthermore, the operating system can be included in the memory card 26.

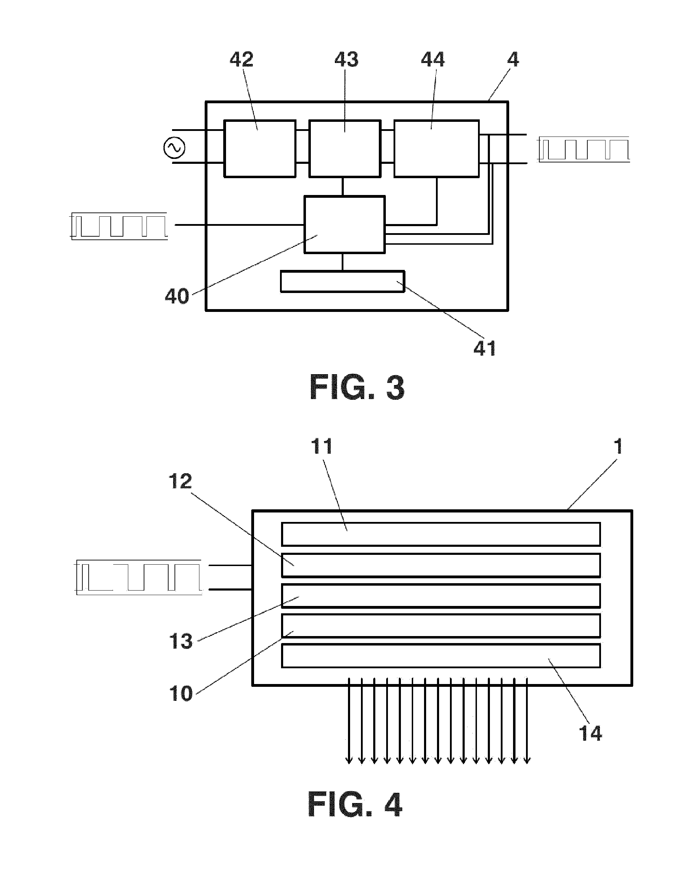

Said lighting controller 4 is described below in reference to Figure 3, and said lighting controller comprises a microcontroller 40 connected to a microswitch 41, an electromagnetic interference filter 42, a power factor corrector 43 and a converter 44. Said lighting controller 4 allows configuring the current or voltage exiting it and which it provides to the lighting module or light source 1. Said microcontroller 40 controls the power factor corrector 43 and the converter 44.

The lighting module 1 depicted in Figure 4 in turn comprises a heat sink 11 for dissipating the heat caused by the lighting elements 10, a printed circuit board 13 on which the lighting elements are located and optical elements 14 through which the light emitted by said lighting elements passes. Furthermore, a thermal interface material 12 is arranged between the heat sink 11 and the printed circuit board 13. By using different optical elements 14, it is possible to provide different angles and patterns to the emitted light.

It must be indicated that it is not essential for the lighting module 1 to be integrated in a single block with the rest of the components of the device of the present invention, rather the lighting module could be a conventional lighting fixture provided with its own lighting elements. Therefore, any lighting fixture known today could be transformed into the lighting device of the present invention in a very simple manner.

To that end, the control means 2 and the sensor or sensors 3 could be placed inside a casing which could be connected to a conventional lighting fixture of any type, even embedded in the ceiling.

The operation of the lighting device of the present invention is as follows.
- The sensors perform continuous measurement;
- Information is captured from the sensors in different modes: in a continuous manner at predetermined intervals, or in a discontinuous manner according to specific events;
- The microprocessor captures data from all the sensors and processes the data locally, sends the data to an external server in a local network or directly to servers by means of wired or wireless connections.

The microprocessor obtains data from the sensors in different modes being able to be varied depending on the type of sensor and different modes being able to be used for the same sensor depending on the circumstances. The common mechanisms are as follows:
- By means of punctually read continuous metrics:
   a) temperature and humidity sensor;
   b) sound sensor;
   c) light sensor (color, intensity and chromatic reproduction).
- By means of continuous metrics and thorough analysis of the obtained data:
   a) sensor for sensing the presence of people by means of detecting WiFi or Bluetooth devices;
   b) sensor for sensing the presence of people or products by means of analyzing the video signal generated by the camera connected to the device.

The detection of the presence of people is carried out by means of two different mechanisms, on one hand, as a result of actively listening for devices that emit radio signals, and on the other hand with active interrogation, as in the case of Bluetooth, where the microprocessor will carry out discovery transmissions by means of a Bluetooth antenna to receive answers from the visible surrounding devices.

In the case of active listening, the system alternates the different signal ranges to capture transmissions in each of them and to identify the presence of devices.

The set of captured signals are transmitted by means of wires or wirelessly to a local and/or remote computer in the server where a joint analysis of said signals is carried out in real time and said signals are stored for subsequent analyses. Both the real time analysis and those analyses performed *a posteriori* serve for managing the lighting system of said establishment. For example, the areas of the shop where there is a greater or smaller number of visitors could be determined based on said signals in order to increase or decrease the light intensity depending on said number of visitors. In turn, coincidence patterns revealing the best context conditions can also be detected for generating specific customer behaviors, and therefore information to be sent to the signal devices which allow adapting the light conditions to the context.

Based on this information, the control means 2 send lighting to the controller 4 which sends the suitable signal to the lighting module 1 for managing the light produced by the lighting elements accordingly.

It is evident that several lighting devices according to the present invention will be placed in an establishment such that central control means will manage the network of devices for managing the lighting of the establishment accordingly.

Despite the fact that reference has been made to a specific embodiment of the invention, it is evident for a person skilled in the art that the lighting device described is susceptible to variations and modifications, and that all the mentioned details can be replaced with other technically equivalent details without departing from the scope of protection defined by the attached claims.

## Claims

1. Lighting device comprising a plurality of lighting elements (10), **characterized in that** it comprises:
- at least one sensor (3) receiving sensory stimuli of a establishment; and
- control means (2) connected with said at least one sensor (3) and with said lighting elements (10), such that said control means (2) send lighting management instructions to said lighting elements (10) depending on the captured and processed information.

2. Lighting device according to claim 1, where said at least one sensor (3) is an antenna receiving information from a plurality of mobile devices located in said establishment and/or temperature, humidity, sound and/or light intensity sensors, and/or a camera connected to said control means (2).

3. Lighting device according to claim 1 or 2, where it also comprises one or several video cameras connected to said control means (2).

4. Lighting device according to any one of the preceding claims, where it also comprises a Bluetooth antenna connected to said control means (2).

5. Lighting device according to claim 1, wherein said control means (2) are connected to said plurality of lighting elements (10) through a lighting controller (4).

6. Lighting device according to claim 1, wherein said control means (2) comprise means (24, 25) for data input and output.

7. Lighting device according to claim 6, wherein said means for data input and output are a memory card reader (25) and/or USB ports (24).

8. Lighting device according to claim 1, wherein said control means (2) comprise a microprocessor (20).

9. Lighting device according to claim 1, wherein said plurality of lighting elements (10) are placed in a lighting module (4) comprising a heat sink (11) for dissipating the heat caused by said lighting elements (10), a printed circuit board (13) on which the lighting elements (10) are located and optical elements (14), through which the light emitted by said lighting elements (10) passes.

10. Lighting device according to claim 5, wherein said lighting controller (4) comprises a converter (44) configuring the output electric current or voltage.

11. Lighting device according to claim 5, wherein said lighting controller (4) comprises a microswitch (41).

12. Lighting device according to any of the preceding claims, wherein said lighting elements (10) are light-emitting diodes.

13. Lighting device according to any of the preceding claims, wherein said at least one sensor (3) and the control means (2) are housed in a casing.

14. Lighting device according to claim 1 or 10, wherein said at least one sensor (3) comprises a USB controller associated therewith.
